Europäisches Patentamt

(19) European Patent Office

Office européen des brevets

(11) Publication number: **0 139 193**
**B1**

(12) **EUROPEAN PATENT SPECIFICATION**

(45) Date of publication of patent specification: **12.08.87**

(21) Application number: **84110530.7**

(22) Date of filing: **04.09.84**

(51) Int. Cl.⁴: **D 21 H 5/00,** D 04 H 1/04, H 01 M 4/80, H 05 K 9/00

(54) Conductive fiber mat.

(30) Priority: **12.09.83 US 531365**

(43) Date of publication of application:
**02.05.85 Bulletin 85/18**

(45) Publication of the grant of the patent:
**12.08.87 Bulletin 87/33**

(84) Designated Contracting States:
**AT BE CH DE FR GB IT LI NL SE**

(56) References cited:
EP-A-0 090 151
FR-A-1 266 097
FR-A-2 425 937
GB-A-1 136 165
GB-A-1 410 107
GB-A-2 027 260
GB-A-2 047 253
GB-A-2 069 021
US-A-4 215 190
US-A-4 332 853
US-A-4 347 104
US-A-4 352 768

ABSTRACT BULLETIN OF THE INSTITUTE OF
PAPER CHEMISTRY, vol. 53, no. 11, May 1983,
page 1319, abstract no. 12286, Appleton, Wisc.,
US

(73) Proprietor: **AMERICAN CYANAMID COMPANY**
**1937 West Main Street P.O. Box 60**
**Stamford Connecticut 06904-0060 (US)**

(72) Inventor: **Giglia, Robert Domenico**
**14 Chester Drive**
**Rye New York 10580 (US)**

(74) Representative: **Wächtershäuser, Günter, Dr.**
**Tal 29**
**D-8000 München 2 (DE)**

(56) References cited:
**PATENTS ABSTRACTS OF JAPAN, vol. 4, no.**
**145 (E-29)627r, 14th October 1980, page 73 E**
**29.**

Courier Press, Leamington Spa, England.

# Description

## Background of the invention

Conductive fiber mats produced from woven metal coated carbon fibers are known in the art. These mats, however, have not proven to be commercially attractive because their method of manufacture is relatively expensive and the conductivity of the mats tends to be anisotropic.

Non-woven conductive fiber mats produced from metal coated carbon fibers are also known. These mats are produced utilizing resinous materials as binders for the fibers. The use of such resinous binders has proven unsatisfactory, however, because the metal coated carbon fibers tend to agglomerate during the formation of the mat. The result is a product which is not of uniform conductivity and is therefore not useful for many service applications.

Therefore, if a conductive fiber mat could be formed which overcomes the above deficiencies of prior mats, an advance in the art would be achieved.

## Summary of the invention

Uniformly conductive mats prepared from metal coated fibers have been produced by employing a fibrillated fiber as the binder material. The use of the fibrillated fiber binder improves the dispersion of the metal coated carbon fibers throughout the mat thereby resulting in a more uniform product. The uniformity is further improved by controlling the length of the metal coated carbon fibers. The instant invention provides a low cost, lightweight, highly conductive mat suitable for lamination into composite structures requiring electrical conductivity.

## Description of the invention including preferred embodiments

The present invention relates to a process for the production of a conductive fiber mat comprising forming a slurry of a mixture of metal coated carbon fibers and a binder material, laying the mixture of fibers down from said slurry as a random non-woven web and drying the resultant web, said process being characterised in that, as a binder material, there are used fibrillated binder fibers, the amount of binder fibers ranging from about 1—15%, by weight, based on the total weight of binder fibers and carbon fibers.

The metal coated carbon fibers useful in the process of the present invention to produce the conductive mats are well known in the art as are methods for their production. For example, U.S. Patent Nos. 3,622,283 and 4,132,828 are exemplary of procedures for their production. The metal used to coat the carbon fibers can comprise any known metal useful therefor including, but not limited to, nickel, silver, zinc, copper, lead, arsenic, cadmium, tin cobalt, gold, indium, iridium, iron, palladium, platinum, tellurium, tungsten or mixtures thereof.

The carbon fibers can be prepared from such carbon fiber precursors as coal tar pitch, petroleum pitch, coal tar, petroleum derived thermal tar, ethylene tars, high-boiling coal tar distillates, ethylene tar distillates, gas oils or polynuclear aromatics. Also useful as precursors are polymers such as acrylonitrile homopolymers and copolymers, polyvinylalcohol, and natural and regenerated cellulose. Methods for preparing carbon fibers useful herein are disclosed in U.S. Patent Nos. 4,069,297 and 4,285,831, which patents are hereby incorporated herein by reference.

The carbon fibers can be of any length although for practicality they should be less than about 15 mm in length. Preferably, and in order to achieve even further uniformity in the mats, the length of the majority of the metal coated carbon fibers should not exceed about 3mm. Most preferably, the fiber length of the metal coated carbon fibers should not exceed about 2mm.

The binder fiber, used in amounts ranging from about 1% to about 15%, by weight, based on the total weight of fibers present in the fiber mixture, can comprise any fibrous material capable of being fibrillated. For example, cellulosic fibers, acrylic fibers, polyester fibers and the like may be used. These fibers may be fibrillated in accordance with art recognized procedures such as for example, high speed shearing. The binder may also be of any practical length, however it is preferred that they not exceed 15 mm.

The preferred binder fibers are those capable of fibrillation which are decomposed upon sintering i.e. will substantially disintegrate upon heating to temperatures ranging from about 600°C to about 800°C. Thus, the preferred binder fibers are acrylic fibers produced from homopolymers and copolymers of acrylonitrile.

The mats are produced by laying down the mixture of fibers from a slurry thereof. The slurry may be in a liquid such as water or in a gas such as air. That is to say, the web may be laid-down by using a wet-laying process (paper-making process) or a dry-layer process, i.e. from an air suspension onto a foraminous belt with the aid of a vacuum applied from below the belt as is known in the art, see U.S. Patent No. 4,353,686.

Once prepared, the mats are readily sintered, as mentioned above, if still higher conductivity is desired. Sintering can be achieved at temperatures ranging from 700°C to 1100°C, under compression and in humidified hydrogen. Sintering decomposes the binder fiber leaving contamination-free surfaces which further facilitate the sintering operation.

The mats, before of after sintering, may be formed into composites by encapsulation into a resinous material such as epoxy resins, polyester resins and the like. This is accomplished by coating, dipping, immersing, etc. the mat in the resinous material and then curing under heat and/or pressure.

The mats produced by the process of the present invention have a wide variety of uses. They are useful as EMI shielding composites, heater blankets, pads and electrodes for electrochemical devices, i.e. batteries, electronic enclosures, heater plates and the like.

The following examples are set forth for purposes of illustration only and are not to be construed as limitations on the present invention except as set forth in the appended claims. All parts and percentages are by weight unless otherwise specified.

### Example 1

To a suitable shearing apparatus is added 1.0 part of commercially available nickel plated carbon fibers in 200 ml. of deionized water. The fibers are sheared for 30 minutes until a majority of the fibers are no longer than about 3mm. One part of fibrillated acrylic fibers is then added along with a flocculating agent and a surface-active agent. An additional 3.9 parts of the nickel plated carbon fibers are added and the complete system is sheared for 2—3 minutes.

The resultant fiber slurry is then drawn down into a sheet using a conventional hand sheetmaking machine. The resultant sheet is rolled between blotter paper to remove excess water before drum drying.

The dry sheet is cut to size and assembled into a sandwich with a sheet of metal screen between two pieces of dry sheet. The laminate is placed between shims and carbon steel bars and placed in a furnace with humidified hydrogen flowing at approximately 400 cc/min. for 60 minutes. The furnace temperature is 800°C. After 2 hours, the furnace is cooled to 200°C and nitrogen gas is admitted until the furnace is at room temperature. The sample is removed and found to be sintered at the crossover points of the coated fibers. No trace or residue can be found of the acrylic fibers by microscopic examination.

### Example 2

The procedure of Example 1 is again followed except that only 7% of the fibrillated acrylic fibers is used. The sheet is recovered from the sheetmaking machine, dried and cut into 30,48 cm × 30,48 cm × 0,0254 cm samples. The area density is measured as 63,08 g/m$^2$, the volume density as .225 g/m$^3$ and the surface resistivity as 0.5 Ω/□. A mold is made from two glass plates 25,4 cm × 30,48 cm and a 0,238 cm plastic mold head. The glass plates are sprayed with a release agent and a commercially available epoxy resin-hardener system is charged to the mold after degassing. The cut fibrous sheet is lowered into the liquid epoxy resin and the entire mold is cured at 50°C for 2 hours and then room tmperature for 6 hours. The glass plates are removed and the resultant sheet is cut into a 22,86 cm × 22,86 cm sample. The sheet weight 120.5 grams, has a density of 2305,7 g/m$^2$, a volume density of 1.16 g/cm$^3$ and a volume resistivity of 0.0823 ohm/cm. This value is estimated to provide better than 40 dB attenuation in a radio frequency shielding application, a value indicated in the literature as acceptable for most equipment applications.

### Example 3

The procedure of Example 2 is again followed except that fibrillated cellulosic fibers are used to replace the acrylic fibers. Similar results are achieved.

### Example 4

Replacement of the nickel coated carbon fibers of Example 2 with silver coated graphite fibers achieves substantially equivalent results.

### Example 5

The epoxy resin of Example 2 is replaced by a polyimide resin. The resultant sheet is substantially equivalent to the sheet of Example 2.

### Example 6

Air-laying the fiber mixture of Example 1 in the absence of flocculant and surface-active agent results in an excellent non-woven mat of equivalent properties.

### Example 7

The sample sheet of Example 1 is impregnated with active materials and converted to the hydroxides required for a nickel-cadmium battery application using the process of R. L. Beauchamp, Electrochemical Society Meeting, Extended Abstracts #65, October 1970, p. 161 and later refined by D. F. Pickett, "Fabrication and Investigation of Nickel-Alkaline Cells, "Part I, AFAPL—TR—75—34, 1974 at the Air Force Astro-Propulsion Laboratory. The sheet is placed between two nickel electrodes in a holding frame so that the sheet does not contact either electrode. The frame is submerged in a 50/50 water-ethanol solution containing 1.8 molar nickel nitrate and 0.2 molar cobalt nitrate. The sheet is cathodized at 0,0775 amperes/cm$^2$ for a period of about 2 hours. Next the sheet is removed from the solution, washed in deionized water and placed in a 35 weight % potassium hydroxide solution. Cathodization of the sheet is performed at 0,0775 amperes/cm$^2$ for 20 minutes and the polarity is reversed and the sheet is anodized using the same current-time schedule. This process of cathodization and anodization is repeated several times after which the sheet is washed in deionized water, dried and cut up into plates. The resultant nickel battery plates are assembled into nickel-cadmium cells using a matching number of commercial cadmium plates and nylon woven separator. The result is an excellent battery.

### Claims

1. A process for the production of a conductive fiber mat which comprises

a) forming a slurry of a mixture of coated carbon fibers and a binder material,

b) laying the fibrous mixture down from said slurry as a random non-woven web, and

c) drying the resulting web, characterised in that as a binder material there are used fibrillated binder fibers, the amount of binder fibers ranging from about 1—15%, by weight, based on the total weight of binder fibers and carbon fibers.

2. A process according to Claim 1 wherein the binder fibers are cellulosic fibers.

3. A process according to Claim 1 wherein the binder fibers are acrylic fibers.

4. A process according to Claim 1 wherein the metal coated carbon fibers are nickel coated.

5. A process according to Claim 1 wherein the dried web is sintered.

6. A process according to Claim 1 wherein the dried web is formed into a composite by encapsulation in an encapsulating resin and curing.

7. A process according to Claim 5 wherein the sintered web is formed into a composite by encapsulation in an encapsulating resin and curing.

8. A process according to Claim 1 wherein the majority of the metal coated carbon fibers are less than about 3mm in length.

9. A web comprising a dry sheet of a mixture of coated carbon fibers and a binder material, characterized in that said binder material being fibrillated binder fibers, the amount of binder fibers ranging from about 1—15%, by weight, based on the total weight of the binder fibers and carbon fibers.

10. A web according to Claim 9 wherein the binder fibers are cellulosic fibers.

11. A web according to Claim 9 wherein the binder fibers are acrylic fibers.

12. A web according to Claim 9 wherein the coated carbon fibers are nickel coated.

13. A web according to Claim 9 wherein the sheet is sintered.

14. A composite comprising the web of Claim 9 encapsulated into a cured encapsulating resin.

15. A composite according to Claim 14 wherein the binder fibers are acrylic fibers.

16. A composite according to Claim 14 wherein the binder fibers are cellulosic fibers.

17. A composite according to Claim 14 wherein the metal coated carbon fibers are nickel coated.

18. A composite according to Claim 14 wherein the encapsulated web is sintered.

19. The composite of Claim 13 in the form of a battery plate.

20. The composite of Claim 14 in the form of radio frequency shielding.

**Patentansprüche**

1. Verfahren zur Herstellung einer leitfähigen Fasermatte, umfassend

(a) Bildung einer Aufschlämmung von einer Mischung beschichteter Kohlenstoffasern und einem Bindemittelmaterial,

(b) Ablegen der faserigen Mischung aus der Aufschlämmung als ein regellos geordnetes Vlies und

(c) Trocknen des resultierenden Vlieses, dadurch gekennzeichnet, daß als ein Bindemittelmaterial fibrilierte Bindemittelfasern verwendet werden, wobei die Menge der Bindemittelfasern im Bereich von etwa 1 bis 15 Gew.-% liegt, bezogen auf das Gesamtgewicht von Bindemittelfasern und Kohlenstoffasern.

2. Verfahren gemäß Anspruch 1, wobei die Bindemittelfasern Cellulosefasern sind.

3. Verfahren gemäß Anspruch 1, wobei die Bindemittelfasern Acrylfasern sind.

4. Verfahren gemäß Anspruch 1, wobei die metallbeschichteten Kohlenstoffasern nickelbeschichtet sind.

5. Verfahren gemäß Anspruch 1, wobei das getrocknete Vlies gesintert wird.

6. Verfahren gemäß Anspruch 1, wobei das getrocknete Vlies zu einem Composit verarbeitet wird durch Einkapselung in ein Einkapselungsharz und Härtung.

7. Verfahren gemäß Anspruch 5, wobei das gesinterte Vlies zu einem Composit verarbeitet wird durch Einkapselung in ein Einkapselungsharz und Härtung.

8. Verfahren gemäß Anspruch 1, wobei die Mehrzahl der metallbeschichteten Kohlenstoffasern eine Länge von weniger als etwa 3 mm aufweist.

9. Matte, umfassend eine trockene Schicht aus einer Mischung von beschichteten Kohlenstoffasern und einem Bindemittelmaterial, dadurch gekennzeichnet, daß es sich bei dem Bindemittelmaterial um fibrilierte Bindemittelfasern handelt, wobei die Menge der Bindemittelfasern im Bereich von 1 bis 15 Gew.-%, bezogen auf das Gesamtgewicht von Bindemittelfasern und Kohlenstoffasern, beträgt.

10. Matte gemäß Anspruch 9, wobei die Bindemittelfasern Cellulosefasern sind.

11. Matte gemäß Anspruch 9, wobei die Bindemittelfasern Acrylfasern sind.

12. Matte gemäß Anspruch 9, wobei die beschichteten Kohlenstoffasern nickelbeschichtet sind.

13. Matte gemäß Anspruch 9, wobei die Schicht gesintert ist.

14. Composit-Material, umfassend die Matte von Anspruch 9, eingekapselt in ein gehärtetes Einkapselungsharz.

15. Composit-Material gemäß Anspruch 14, wobei die Bindemittelfasern Acrylfasern sind.

16. Composit-Material gemäß Anspruch 14, wobei die Bindemittelfasern Cellulosefasern sind.

17. Composit-Material gemäß Anspruch 14, wobei die metallbeschichteten Kohlenstoffasern nickelbeschichtet sind.

18. Composit-Material gemäß Anspruch 14, wobei die eingekapselte Matte gesintert ist.

19. Das Composit-Material von Anspruch 13 in Form einer Batterieplatte.

20. Das Composit-Material von Anspruch 14 in der Form einer Radiofrequenzabschirmung.

**Revendications**

1. Procédé de préparation d'une nappe fibreuse conductrice, dans lequel:

(a) on forme une suspension d'un mélange de fibres de carbone revêtues et d'un matériau liant,

(b) on étale le mélange fibreux à partir de ladite suspension en une nappe non tissée à structure aléatoire, et

(c) on sèche la nappe résultante, caractérisée en ce que l'on utilise comme matériaux liants des fibres liantes fibrillées, la quantité de fibres liantes étant d'environ 1 à 15% en poids par rapport au poids total des fibres liantes et des fibres de carbone.

2. Procédé suivant la revendication 1, dans lequel les fibres liantes sont des fibres cellulosiques.

3. Procédé suivant la revendication 1, dans lequel les fibres liantes sont des fibres acryliques.

4. Procédé suivant la revendication 1, dans lequel les fibres de carbone revêtues de métal, sont revêtues de nickel.

5. Procédé suivant la revendication 1, dans lequel la nappe séchée est frittée.

6. Procédé suivant la revendication 1, dans lequel la nappe séchée est mise sous la forme d'un matériau composite par enrobage dans une résine d'enrobage et par durcissement.

7. Procédé suivant la revendication 5, dans lequel la nappe frittée est mise sous la forme d'un matériau composite par enrobage dans une résine d'enrobage et par durcisseent.

8. Procédé suivant la revendication 1, dans lequel la plus grande partie des fibres de carbone revêtues de métal a une longueur inférieure à environ 3 mm.

9. Nappe comprenant une feuille sèche d'un mélange de fibres de carbone revêtues et d'un matériau liant, caractérisée en ce que ledit matériau liant est constitué par des fibres liantes fibrillées, la quantité de fibres liantes d'environ 1 à 15% en poids par rapport au poids total des fibres liantes et des fibres de carbone.

10. Nappe suivant la revendication 9, dans laquelle les fibres liantes sont des fibres en cellulose.

11. Nappe suivant la revendication 9, caractérisée en ce que les fibres liantes sont des fibres en résine acrylique.

12. Nappe suivant la revendication 9 dans laquelle les fibres de carbone revêtues sont revêtues de nickel.

13. Nappe suivant la revendication 9, dans laquelle la feuille est frittée.

14. Matériau composite comprenant la nappe de la revendication 9 enrobée dans une résine d'enrobage durcie.

15. Matériau composite suivant la revendication 14, dans lequel les fibres liantes sont des fibres acryliques.

16. Matériau composite suivant la revendication 14, dans lequel les fibres liantes sont des fibres cellulosiques.

17. Matériau composite suivant la revendication 14, dans lequel les fibres de carbone revêtues de métal, sont revêtues de nickel.

18. Matériau composite suivant la revendication 14 dans laquelle la nappe enrobée est frittée.

19. Matériau composite suivant la revendication 13 sous la forme d'une plaque d'accumulateur.

20. Matériau composite suivant la revendication 14 sous la forme d'un blindage haute fréquence.